Europäisches Patentamt

European Patent Office

Office européen des brevets

(11) Veröffentlichungsnummer: **0 340 463**
**A1**

## (12) EUROPÄISCHE PATENTANMELDUNG

(21) Anmeldenummer: 89105928.9

(22) Anmeldetag: 05.04.89

(51) Int. Cl.4: **G09F 9/30 , F21S 5/00 , B60Q 1/26**

(30) Priorität: 14.04.88 DE 3812418

(43) Veröffentlichungstag der Anmeldung:
08.11.89 Patentblatt 89/45

(84) Benannte Vertragsstaaten:
AT BE CH DE ES FR GB GR IT LI LU NL SE

(71) Anmelder: HOECHST AKTIENGESELLSCHAFT
Postfach 80 03 20
D-6230 Frankfurt am Main 80(DE)

(72) Erfinder: Coutandin, Jochen, Dr.
Pestalozzistrasse 9
D-6536 Langenlonsheim(DE)
Erfinder: Groh, Werner, Dr.
Geisenheimer Strasse 93
D-6000 Frankfurt am Main 71(DE)
Erfinder: Herbrechtsmeier, Peter, Dr.
Friedrich-Stolze-Strasse 10
D-6240 Königstein/Taunus(DE)
Erfinder: Theis, Jürgen, Dr.
Am Tiergarten 40
D-6000 Frankfurt am Main(DE)

(54) **Faseroptische Leuchtzeichenanlage.**

(57) Die erfindungsgemäße Leuchtzeichenanlage besteht im wesentlichen aus einem Leuchtkörper, einer Lichtquelle und einem System von Lichtwellenleitern, das Leuchtkörper und Lichtquelle verbindet. Der Leuchtkörper ist ein mit einer Vielzahl von Löchern versehenes plattenförmiges Gebilde aus thermoplastischem Kunststoff und die Lichtwellenleiter enden in den Löchern direkt.

Die Leuchtzeichenanlage ist einfach zu fertigen und zeichnet sich durch eine geringe Einbautiefe aus. Sie ist insbesondere als Kraftfahrzeug-Rückleuchte verwendbar.

Fig. 1

EP 0 340 463 A1

## Faseroptische Leuchtzeichenanlage

Die Erfindung bezieht sich auf eine Leuchtzeichenanlage, bestehend im wesentlichen aus einem Leuchtkörper, einer Lichtquelle und einem System von Lichtwellenleitern, das den Leuchtkörper mit der Lichtquelle verbindet. Leuchtkörper und Lichtwellenleiter bestehen aus einem thermoplastischen Kunststoff.

Bekannt ist ein Lichtleitersystem für z.B. Kraftfahrzeugrückleuchtengruppen zur Erzeugung von gleichzeitigen Lichtsignalen mit unterschiedlicher Dauer und Farbe und zu unterschiedlichen Zeiten in voneinander getrennten Leuchtkörpern (vgl. DE-OS 33 19 179). Die Leuchtkörper sind mit Hilfe von Lichtleitern mit einer gemeinsamen zentralen Lichtquelle in einem Verteilergehäuse verbunden. Allerdings benötigen die Leuchtkörper noch zusätzliche Einrichtungen zum Verteilen des durch die Lichtleiter ankommenden Lichtes im Leuchtkörper.

Weiterhin ist ein faseroptisches Wechselverkehrszeichen nach einem Mikroraster-System bekannt (vgl. SCHOTTinformation 3/1987, S. 14-17). Der Leuchtkörper ist mittels Lichtleitern mit Lichtquellen verbunden, welche nach Bedarf eingeschaltet werden. Jeder der vielen Lichtpunkte im Leuchtkörper ist mit einer speziellen Optik ausgestattet, wodurch das Verkehrszeichen sehr aufwendig und teuer wird.

Die Aufgabe bestand darin, eine Leuchtzeichenanlage zu finden, welche einfach und preiswert zu fertigen ist.

Es wurde gefunden, daß die Aufgabe gelöst werden kann, wenn der Leuchtkörper ein mit einer Vielzahl von Löchern versehenes plattenförmiges Gebilde aus thermoplastischem Kunststoff ist und die Lichtwellenleiter in den Löchern direkt enden.

Die Erfindung betrifft somit die in den Ansprüchen beschriebene faseroptische Leuchtzeichenanlage und ihre Verwendung.

Die erfindungsgemäße Leuchtzeichenanlage besteht im wesentlichen aus einem Leuchtkörper, einer Lichtquelle und einem System von Lichtwellenleitern, das den Leuchtkörper mit der Lichtquelle verbindet.

Der Leuchtkörper ist ein plattenförmiges Gebilde. Die Dicke des Leuchtkörpers beträgt 1 bis 10, vorzugsweise 2 bis 5 mm. Der Leuchtkörper ist mit einer Vielzahl von Löchern versehen, welche vorzugsweise einen kreisförmigen Querschnitt mit einem Durchmesser von 0,2 bis 1,5, vorzugsweise 0,25 bis 0,75 mm aufweisen und vorzugsweise in Mustern angeordnet sind. Der Abstand der Löcher voneinander beträgt 2 bis 10, vorzugsweise 2 bis 6 mm.

Mit der Rückseite ist der Leuchtkörper mittels eines Lichtwellenleiter-Systems aus mindestens einem Bündel von faserförmigen Lichtwellenleitern aus einem transparenten thermoplastischem Kunststoff mit einer Lichtquelle verbunden. Der Querschnitt der einzelnen Lichtwellenleiter entspricht dem Querschnitt der vorgenannten Löcher. Die Lichtwellenleiter enden in den Löchern, vorzugsweise enden sie bündig an der Vorderseite des Leuchtkörpers.

Der Leuchtkörper besteht aus einem thermoplastischem Kunststoff. Als solcher kommt infrage Polymethylmethacrylat, Polycarbonat, Polystyrol, Polyethylen, Polypropylen, PVC. Bevorzugt werden Polymethylmethacrylat und Polycarbonat.

Wenn der thermoplastische Kunststoff transparent ist, kann die den Lichtwellenleitern zugewandte Rückseite farbig ausgestaltet sein. Um die Abstrahlcharakteristik des Leuchtkörpers zu verändern, kann die von den Lichtwellenleitern abgewandte Vorderseite aufgerauht sein. Der transparente thermoplastische Kunststoff der Lichtwellenleiter besteht im wesentlichen aus einem Polycarbonat, einem Methacrylsäureester-Polymer oder einem Fluorpolymer.

Die Lichtquelle der erfindungsgemäßen Leuchtzeichenanlage kann verschiedener Art sein, sofern sie einen ausreichenden Lichtstrom bietet, vorzugsweise wird eine Halogenlampe eingesetzt. Zwischen der Lichtquelle und dem Lichtwellenleiter-System können farbige Filter angeordnet sein, um im Leuchtkörper Leuchtzeichen verschiedener Farbe zu erzeugen. Auch ist es möglich, die Lichtwellenleiter nach bestimmten Mustern zu bündeln und die Bündel an verschiedene Lichtquellen heranzuführen.

Die erfindungsgemäße Leuchtzeichenanlage zeichnet sich durch eine geringe Einbautiefe aus.

Figur 1 zeigt schematisch eine Leuchtzeichenanlage im Längsschnitt,

Figur 2 eine Draufsicht auf die von den Lichtwellenleitern abgewandte Vorderseite des Leuchtkörpers.

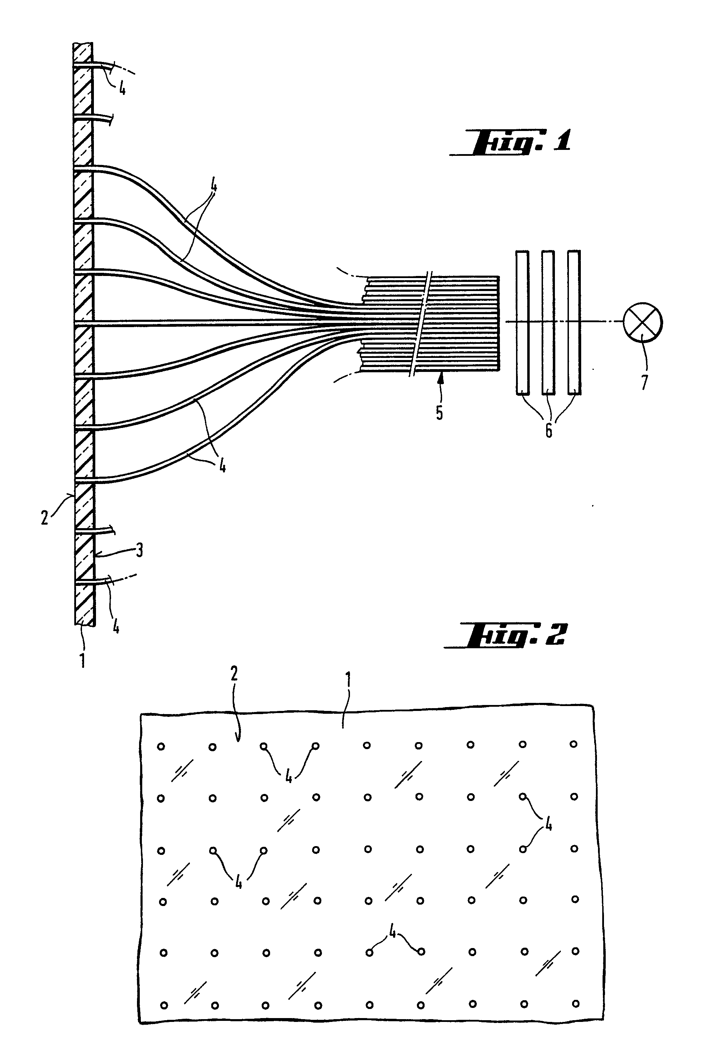

In den Figuren bedeuten (1) den Leuchtkörper mit Vorderseite (2) und Rückseite (3), (5) ein Bündel der Lichtwellenleiter (4), (6) Farbfilter und (7) die Lichtquelle.

Das nachfolgende Beispiel soll die Erfindung erläutern.

### Beispiel

Eine 2 mm starke Platte aus farblosem Polymethylmethacrylat von der Größe 30 x 14,5 cm wurde auf der einen Seite mit einem silbergrauen Lack überzogen. Sodann wurden 1200 Löcher mit einem Durchmesser von 0,5 mm in 3 Bändern zu je 400 Löchern gebohrt. Die Bänder waren in Längsrichtung angeordnet, der Lochabstand innerhalb der Bänder betrug 5 mm. In die Löcher wurden Polymer-Lichtwellenleiter ( Kern Polymethylmethacrylat, Mantel Fluorpolymer; Durchmesser 0,5 mm; Länge 1,5 m) mittels eines Epoxyharzklebers so eingeklebt, daß die lackierte Fläche des Leuchtkörpers den Lichtwellenleitern zugewandt war. Nach dem Trocknen des Klebers wurde die von den Lichtwellenleitern abgewandte Vorderfläche des Leuchtkörpers poliert.

Die Lichtwellenleiter eines jeden Bandes wurden gesondert zusammengefaßt und unter Zuhilfenahme eines Schrumpfschlauches auf Basis Polyvinylidenfluorid und Erhitzen auf eine Temperatur von 180°C zu je einem Lichtleitstab mit einem Durchmesser von 10 mm verschmolzen. Die Enden der Lichtleitstäbe wurden poliert und in Metallhülsen gefaßt. Vor die polierten Enden der Lichtleitstäbe wurden Farbfilter und eine Lichtquelle angebracht.

Diese Leuchtzeichenanlage war als Kraftfahrzeug-Rückleuchte verwendbar.

## Ansprüche

1. Faseroptische Leuchtzeichenanlage, im wesentlichen bestehend aus einem Leuchtkörper, einer Lichtquelle und einem System von Lichtwellenleitern, das den Leuchtkörper mit der Lichtquelle verbindet, dadurch gekennzeichnet, daß der Leuchtkörper ein mit einer Vielzahl von Löchern versehenes, plattenförmiges Gebilde aus einem thermoplastischen Kunststoff ist und das Lichtwellenleiter-System aus mindestens einem Bündel von faserförmigen Lichtwellenleitern aus einem transparenten thermoplastischen Kunststoff besteht, deren Querschnitt dem Querschnitt der genannten Löcher entspricht und die in diesen Löchern enden.

2. Leuchtzeichenanlage nach Anspruch 1, dadurch gekennzeichnet, daß die Dicke des Leuchtkörpers 1 bis 10 mm beträgt.

3. Leuchtzeichenanlage nach Anspruch 1, dadurch gekennzeichnet, daß die Löcher des Leuchtkörpers in Mustern angeordnet sind.

4. Leuchtzeichenanlage nach Anspruch 1, dadurch gekennzeichnet, daß die Löcher und die Lichtwellenleiter einen kreisförmigen Querschnitt aufweisen.

5. Leuchtzeichenanlage nach Anspruch 4, dadurch gekennzeichnet, daß der Querschnitt einen Durchmesser von 0,2 bis 1,5 mm aufweist.

6. Leuchtzeichenanlage nach Anspruch 1, dadurch gekennzeichnet, daß der Abstand der Löcher des Leuchtkörpers voneinander 2 bis 10 mm beträgt.

7. Leuchtzeichenanlage nach Anspruch 1, dadurch gekennzeichnet, daß die Lichtquelle eine Halogenlampe ist.

8. Leuchtzeichenanlage nach Anspruch 1, dadurch gekennzeichnet, daß zwischen der Lichtquelle und dem Lichtwellenleiter-System farbige Filter angeordnet sind.

9. Leuchtzeichenanlage nach Anspruch 1, dadurch gekennzeichnet, daß der transparente thermoplastische Kunststoff im wesentlichen aus einem Polycarbonat, Methacrylsäureester-Polymer oder Fluorpolymer besteht.

10. Verwendung der Leuchtzeichenanlage zur Herstellung von Kraftfahrzeug-Rückleuchten.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | GB-A-2 016 132 (CARL-ZEISS-STIFTUNG TRADING A/S JENAER GLASSWERK SCHOTT & GEN) * Seite 1, Zeilen 7-26,76-105; Figur * | 1 | G 09 F 9/30 F 21 S 5/00 B 60 Q 1/26 |
| A | --- | 7-8 | |
| Y | FR-A-2 439 938 (S. ROUAULT) * Ansprüche 1-2; Seite 1, Zeilen 1-32; Figur * --- | 1 | |
| Y | US-A-4 261 936 (E.I. DU PONT DE NEMOURS AND CO.) * Spalte 1, Zeile 63 - Spalte 2, Zeile 62 * --- | 1 | |
| A | GB-A-1 507 883 (BARR & STROUD LTD) * Ansprüche 1,5; Seite 2, Zeilen 84-97; Seite 3, Zeilen 15-41; Figuren 4,7 * --- | 3-6 | |
| A | JP-A-59 212 804 (SUMITOMO DENKI KOGYO K.K.) * Zusammenfassung; Figur * ----- | 9 | |

**RECHERCHIERTE SACHGEBIETE (Int. Cl.4)**

G 09 F
F 21 S
G 02 B

Der vorliegende Recherchenbericht wurde für alle Patentansprüche erstellt

| Recherchenort | Abschlußdatum der Recherche | Prüfer |
|---|---|---|
| DEN HAAG | 21-08-1989 | FRANSEN L.J.L. |

EPO FORM 1503 03.82 (P0403)